Europäisches Patentamt

European Patent Office

Office européen des brevets

(19)

(11) **EP 0 908 759 A1**

(12) **DEMANDE DE BREVET EUROPEEN**

(43) Date de publication:
**14.04.1999 Bulletin 1999/15**

(51) Int Cl.⁶: **G02F 1/35**

(21) Numéro de dépôt: 98402487.7

(22) Date de dépôt: 07.10.1998

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **09.10.1997 FR 9712605**

(71) Demandeur: **FRANCE TELECOM**
**75015 Paris (FR)**

(72) Inventeurs:
• **Sigogne, Didier**
**91140 Villebon sur Yvette (FR)**
• **Rigny, Arnaud**
**92220 Bagneux (FR)**
• **Chelles, Sandrine**
**75001 Paris (FR)**

(74) Mandataire: **Dubois-Chabert, Guy**
**Société de Protection des Inventions**
**25, rue de Ponthieu**
**75008 Paris (FR)**

(54) **Dispositif optique non-lineaire de traitement d'un signal optique, comprenant un interferometre à bras multiples**

(57)     Dispositif optique non-linéaire de traitement d'un signal optique, comportant un interféromètre à bras multiples.

Ce dispositif comprend un interféromètre optique comportant N bras (B1 ... BN) avec N≥3, N amplificateurs optiques à semiconducteurs (A1 ... AN) insérés dans les N bras, un premier moyen de couplage optique (28) qui reçoit un signal de commande et répartit celui-ci dans les N bras et un deuxième moyen de couplage optique (32) qui reçoit un signal d'entrée et répartit celui-ci dans au moins N-1 des N bras et qui collecte des lumières résultant de la répartition du signal de commande dans les N bras et fournit un signal de sortie résultant de l'interférence de ces lumières. Application aux télécommunications optiques.

*FIG.8*

**Description**

**DOMAINE TECHNIQUE**

La présente invention concerne un dispositif optique non-linéaire de traitement d'un signal optique.

Elle s'applique tout particulièrement aux télécommunications optiques.

Le dispositif objet de l'invention est un dispositif optique non-linéaire rapide, qui permet divers traitement de signaux optiques.

La non-linéarité du dispositif résulte du fait que la puissance optique à la sortie de ce dispositif n'est pas proportionnelle à la puissance optique à l'entrée de celui-ci, et cela même en régime transitoire.

Grâce à cette non-linéarité, un signal optique peut être modulé par les variations de puissance optique d'un autre signal optique.

Si les longueurs d'onde de ces deux signaux sont différentes, les informations que l'on veut transmettre sont transférées d'un canal à un autre canal.

Un tel traitement, appelé traitement de conversion de longueurs d'onde, est intéressant pour la transmission d'informations dans un système fondé sur le multiplexage en longueur d'onde.

On distingue en général quatre types de non-linéarités : le type sur-linéaire inversé, le type sur-linéaire non inversé, le type sous-linéaire inversé et le type sous-linéaire non-inversé.

Suivant le type de non-linéarité, le dispositif objet de l'invention peut être utilisé pour la remise en forme ou le démultiplexage de signaux optiques ou pour l'extraction d'un signal d'horloge à partir d'un train d'impulsions optiques dans un système fondé sur le multiplexage temporel.

De plus, compte tenu de l'utilisation d'un interféromètre à bras multiples dans l'invention, de nouvelles applications sont envisageables grâce à la possibilité de « modeler » la réponse de cet interféromètre à bras multiples suivant une forme définie d'avance (d'où une analogie avec les filtres électriques).

**ÉTAT DE LA TECHNIQUE ANTÉRIEURE**

Il est relativement difficile de concevoir un composant optique qui soit à la fois non-linéaire et rapide pour des puissances optiques "raisonnables", du genre de celles que l'on utilise pour les télécommunications optiques.

Une solution connue consiste à utiliser la saturation des amplificateurs optiques à semiconducteurs.

On consultera à ce sujet le document (1) qui, comme les autres documents cités par la suite, est mentionné à la fin de la présente description.

Une telle solution conduit à deux types de dispositifs, l'un qui est fondé sur la saturation du gain des amplificateurs optiques à semiconducteurs et l'autre qui est fondé sur la saturation de l'indice de réfraction de ces amplificateurs.

Les dispositifs du premier type utilisent de simples amplificateurs optiques à semiconducteurs tels qu'ils ont été développés pour l'amplification de signaux optiques.

Dans ce cas, la non-linéarité obtenue, qui est du type sous-linéaire inversé, est contraire à celle qui est recherchée pour la plupart des applications et qui est du type sur- ou sous-linéaire non-inversé.

Les dispositifs du deuxième type utilisent l'introduction d'un amplificateur optique à semiconducteur dans un interféromètre optique réalisé sur un substrat semiconducteur.

Cet interféromètre peut être :

- un interféromètre de Michelson (voir le document (2))
- ou un interféromètre de Mach-Zehnder asymétrique (voir le document (3))
- ou un interféromètre de Mach-Zehnder symétrique (voir le document (4)).

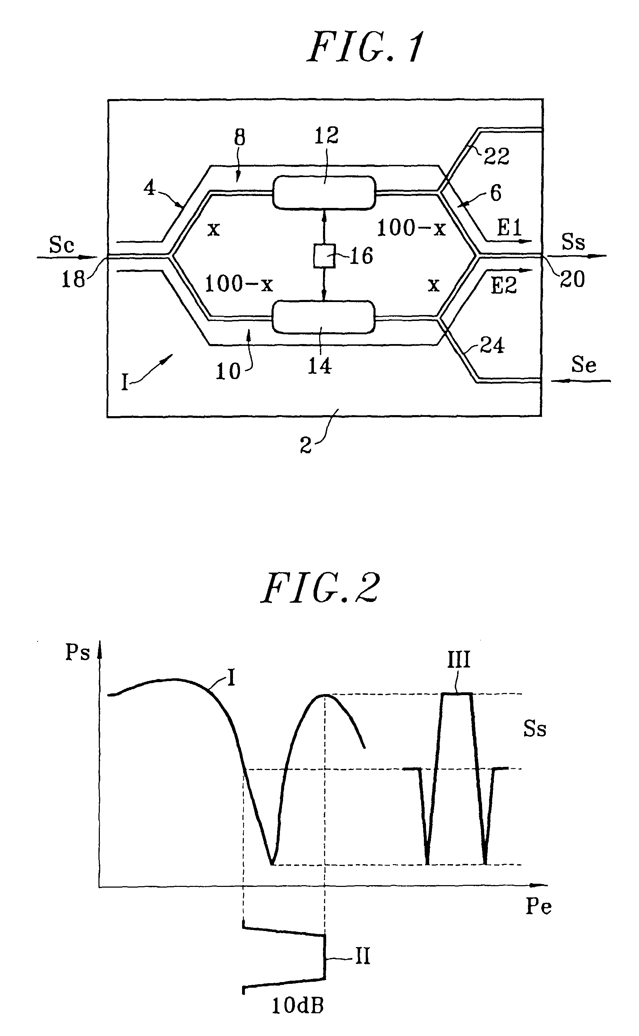

La figure 1 est une vue schématique d'un dispositif optique non-linéaire connu pour le traitement d'un signal optique.

Ce dispositif de la figure 1 comprend un interféromètre de Mach-Zehnder I formé sur un substrat semiconducteur 2.

Cet interféromètre comprend deux jonctions optiques en Y qui sont formées sur le substrat 2 et ont respectivement les références 4 et 6 sur la figure 1.

L'interféromètre comprend aussi deux guides d'ondes optiques 8 et 10 parallèles et de même longueur, qui constituent les bras de l'interféromètre et raccordent les jonctions 4 et 6 l'une à l'autre, comme on le voit sur la figure 1.

Le dispositif représenté sur celle-ci comprend en outre deux amplificateurs optiques à semiconducteurs 12 et 14 identiques, qui sont formés sur le substrat 2 et respectivement insérés dans les bras 8 et 10 de l'interféromètre, comme on le voit sur la figure 1.

Ce dispositif est muni de moyens 16 destinés à alimenter les amplificateurs 12 et 14 par des courants de polarisation ("*biasing currents*").

La notion de symétrie ou d'asymétrie d'un interféromètre de type Mach-Zehnder est relative à la puissance optique.

Plus précisément, en considérant l'interféromètre I de la figure 1, cette symétrie ou cette asymétrie concerne les deux jonctions optiques 4 et 6.

L'interféromètre de Mach-Zehnder est dit symétrique lorsque ces deux jonctions sont des jonctions 50:50 (c'est-à-dire lorsque la répartition de puissance optique correspondante est 50%:50%).

L'interféromètre de Mach-Zehnder est dit asymétrique lorsque la jonction optique 4 est de type x:(100-x) et que la jonction optique 6 est de type (100-x):x avec x≠50, la répartition de puissance optique correspondante étant alors x%:(100%-x%) pour la jonction 4 et (100%-x%):x% pour la jonction 6.

Considérons, à titre d'exemple, un dispositif utilisant un interféromètre de Mach-Zehnder symétrique.

Dans ce cas, le paramètre x est égal à 50.

Comme on le voit sur la figure 1, l'entrée de la jonction 4 (destinée à la commande du dispositif) et la sortie de la jonction 6 (sortie du dispositif) ont respectivement les références 18 et 20 et l'interféromètre est muni de deux jonctions optiques 22 et 24 qui sont formées sur le substrat 2 et respectivement couplées aux bras 8 et 10 de l'interféromètre, du côté de la jonction optique 6.

L'une des jonctions 22 et 24, à savoir la jonction 24 dans le cas de la figure 1, permet l'injection d'un signal optique d'entrée Se dans le bras 10 de l'interféromètre.

L'entrée 18 sert à l'injection d'un signal optique de commande Sc.

Ce signal Sc est un signal optique continu c'est-à-dire un signal dont la puissance optique est constante au cours du temps.

On récupère un signal optique de sortie Ss à la sortie 20.

La jonction 22, qui est associée à l'autre bras 8, ne sert qu'à équilibrer l'interféromètre de Mach-Zehnder, en ce qui concerne la puissance optique, pour que les amplitudes des champs optiques E1 et E2 du signal de commande Sc soient identiques quand ces champs optiques interfèrent en sortie.

En injectant un signal d'entrée Se de puissance optique suffisante dans le bras 10 de l'interféromètre, l'indice de réfraction de l'amplificateur optique à semiconducteur 14 correspondant est modifié par saturation.

Il en résulte une variation de phase du champ optique E2 par rapport au champ optique E1.

Cette variation de phase est transformée, par interférence, en variation de transmission de l'interféromètre de Mach-Zehnder.

Dans ces conditions, en injectant un signal optique continu Sc à l'entrée 18 du dispositif de la figure 1, ce signal Sc est modulé par le signal d'entrée Se et l'on obtient à la sortie 20 du dispositif un signal optique de sortie Ss qui est modulé par le signal d'entrée Se.

Les composants optiques non-linéaires connus pour le traitement d'un signal présentent des inconvénients.

En effet, l'utilisation d'un composant amplificateur discret en saturation de gain permet la conversion de longueur d'onde mais cette technique dégrade le taux d'extinction du signal pour la conversion vers les grandes longueurs d'onde.

Une telle configuration ne permet pas d'envisager d'autres fonctions de traitement du signal.

On peut également utiliser un interféromètre de type Mach-Zehnder ou Michelson.

Ces deux dispositifs, qui utilisent des amplificateurs optiques à semi-conducteurs, permettent d'améliorer le taux d'extinction du signal mais, pour une variation du signal d'entrée Se, il est nécessaire de modifier le réglage de l'interféromètre.

Il n'est pas possible en effet de traiter sans déformation les signaux dont les taux d'extinction d'entrée sont importants ou qui « chevauchent » les deux pentes de la courbe de transmission de l'interféromètre.

Une distorsion peut alors apparaître sur le signal traité.

Ceci est schématiquement illustré par la figure 2 où l'on voit les variations de la puissance lumineuse Ps du signal de sortie Ss en fonction de la puissance lumineuse Pe du signal d'entrée Se (courbe I).

On voit aussi un signal d'entrée Se qui « chevauche » les deux pentes de la courbe de transmission de l'interféromètre (courbe II) ainsi que le signal de sortie correspondant Ss (courbe III).

Pour remédier à ce défaut il a été proposé d'asservir le courant de l'un des bras de l'interféromètre à la puissance du signal d'entrée (voir le document (5)).

Cette solution conduit à une plage d'utilisation élargie par rapport à la variation du signal d'entrée mais présente le défaut de limiter le débit à cause du traitement électronique de l'asservissement, tout en compliquant l'utilisation d'un tel dispositif.

Une autre solution connue consiste à utiliser un amplificateur optique à semi-conducteur pour formater le signal avant qu'il n'entre dans le dispositif interférométrique (voir le document (6)).

Toutes ces techniques connues ne résolvent que partiellement le délicat problème de la fixation d'un point de fonctionnement pour tout signal optique incident.

## EXPOSÉ DE L'INVENTION

La présente invention a pour but de résoudre les problèmes précédemment décrits, en particulier pour ce qui concerne la conversion de longueurs d'onde, le démultiplexage ou la remise en forme de signaux, mieux que ne le font les techniques connues mentionnées plus haut.

De façon précise, la présente invention a pour objet un dispositif optique non-linéaire de traitement d'un signal optique, ce dispositif étant caractérisé en ce qu'il comprend :

- un interféromètre optique comportant N bras respectivement constitués de N guides de lumière et ayant chacun des première et deuxième extrémités, N étant un nombre entier au moins égal à 3,
- N amplificateurs optiques à semiconducteurs qui sont respectivement insérés dans les N bras de l'interféromètre,
- un premier moyen de couplage optique prévu pour

  • recevoir un premier signal optique appelé signal de commande et
  • répartir d'une manière déterminée ce signal de commande dans les N bras à partir des premières extrémités de ceux-ci et

- un deuxième moyen de couplage optique prévu pour

  • recevoir un deuxième signal optique appelé signal d'entrée et répartir d'une manière déterminée ce signal d'entrée dans au moins N-1 des N bras, de manière à modifier l'indice de réfraction des amplifications optiques à semiconducteurs insérés dans ces N-1 bras et à induire des déphasages entre les N bras de l'interféromètre, et
  • collecter, à partir des N bras, des lumières résultant de la répartition du signal de commande dans les N bras et fournir un troisième signal optique appelé signal de sortie et résultant de l'interférence de ces lumières.

Le dispositif objet de l'invention permet ainsi d'effectuer différents traitements d'un signal optique.

En ce qui concerne la conversion de longueur d'onde, ce dispositif résout le délicat problème de la fixation d'un point de fonctionnement pour les convertisseurs interférométriques mentionnés plus haut (qui ont une faible dynamique d'entrée).

Du fait de la possibilité de donner la forme que l'on souhaite à la réponse du dispositif interférométrique objet de l'invention, il est possible d'accéder, avec ce dispositif, à d'autres fonctions comme la régénération ou le formatage d'un signal optique, la réduction du bruit ou le déclenchement.

De plus, plusieurs fonctions peuvent être disponibles soit simultanément soit indépendamment, en modifiant le courant injecté dans les amplificateurs optiques à semiconducteurs faisant partie du dispositif et/ou les moyens de déphasage que ce dispositif comprend de préférence, en configurant N-1 de ces moyens de déphasage.

En effet, selon un mode de réalisation préféré du dispositif objet de l'invention, celui-ci comprend en outre N moyens de déphasage qui sont respectivement insérés dans les N bras et aptes à modifier les phases respectives des lumières résultant de la répartition du signal de commande dans les N bras en l'absence du signal d'entrée.

Chaque moyen de déphasage peut être choisi dans le groupe comprenant les modulateurs électro-optiques et les guides de lumière thermo-réfractifs.

Selon un mode de réalisation particulier du dispositif objet de l'invention, les amplificateurs optiques à semiconducteurs ont des longueurs inégales.

De préférence, le premier moyen de couplage optique comprend un coupleur optique de type 1xN ayant une entrée prévue pour recevoir le signal de commande et N sorties respectivement reliées aux premières extrémités des N bras.

Selon un premier mode de réalisation particulier du dispositif objet de l'invention, le deuxième moyen de couplage optique comprend :

- un coupleur optique de type Nx1 ayant N entrées respectivement reliées aux deuxièmes extrémités des N bras et une sortie prévue pour fournir le signal de sortie,
- un coupleur optique ayant une entrée prévue pour recevoir le signal d'entrée et au moins N-1 sorties qui reçoivent chacune une partie de ce signal d'entrée et
- au moins N-1 coupleurs optiques respectivement reliés à ces N-1 sorties et prévus pour injecter ces parties du signal d'entrée dans au moins N-1 des N bras, entre les amplificateurs optiques à semiconducteurs correspondants et les deuxièmes extrémités de ces bras, en sens contraire aux lumières résultant de la répartition du signal de commande dans les bras.

Selon un deuxième mode de réalisation particulier, le deuxième moyen de couplage optique comprend :

- un coupleur optique de type Nx1 ayant N entrées respectivement reliées aux deuxièmes extrémités des N bras et une sortie prévue pour fournir le signal de sortie,
- un coupleur optique ayant une entrée prévue pour recevoir le signal d'entrée et au moins N-1 sorties qui reçoivent chacune une partie de ce signal d'entrée et
- au moins N-1 coupleurs optiques respectivement reliés à ces N-1 sorties et prévus pour injecter ces parties du signal d'entrée dans au moins N-1 des N bras, entre les premières extrémités de ces bras et les amplificateurs optiques à semiconducteurs correspondants, dans le sens des lumières résultant de la répartition du signal de commande dans les bras.

Selon un troisième mode de réalisation particulier, le deuxième moyen de couplage optique comprend un coupleur optique de type Nx2 ayant, d'un côté, N branches respectivement reliées aux deuxièmes extrémités des N bras de l'interféromètre et, de l'autre côté, deux branches, l'une de celles-ci étant prévue pour recevoir le signal d'entrée et l'autre pour fournir le signal de sortie.

Selon un quatrième mode de réalisation particulier, le deuxième moyen de couplage optique comprend :

- un coupleur optique de type Nx1 ayant, d'un côté, N branches respectivement reliées aux deuxièmes extrémités des N bras de l'interféromètre et, de l'autre côté, une branche d'entrée-sortie prévue pour la circulation des signaux d'entrée et de sortie, et
- un coupleur optique de type 1x2 ayant, d'un côté, une branche reliée à la branche d'entrée-sortie de ce coupleur optique de type Nx1 et, de l'autre côté, deux branches, l'une de celles-ci étant prévue pour recevoir le signal d'entrée et l'autre pour fournir le signal de sortie.

De plus, dans la présente invention, au moins l'un des coupleurs optiques utilisés peut être un coupleur optique multimode par interférence (« optical multimode interference coupler ») que l'on appelle plus simplement coupleur MMI.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1, déjà décrite, est une vue schématique d'un dispositif optique non-linéaire connu pour le traitement d'un signal optique,
- la figure 2, déjà décrite, représente schématiquement les variations de la puissance lumineuse d'un signal de sortie en fonction de la puissance lumineuse d'un signal d'entrée pour un dispositif optique non-linéaire connu,
- les figures 3 à 5 représentent schématiquement divers exemples de ces variations pour des dispositifs conformes à l'invention,
- les figures 6 à 9 sont des vues schématiques de modes de réalisation particuliers du dispositif objet de l'invention,
- la figure 10 illustre schématiquement les variations de la puissance lumineuse d'un signal de sortie en fonction de la puissance lumineuse d'un signal d'entrée pour un dispositif interférométrique connu à deux bras, et
- les figures 11 et 12 illustrent schématiquement les variations de la puissance lumineuse d'un signal de sortie en fonction de la puissance lumineuse d'un signal d'entrée pour des dispositifs conformes à l'invention, ayant respectivement 5 bras et 16 bras.

## EXPOSÉ DÉTAILLÉ DE MODES DE RÉALISATION PARTICULIERS

Mentionnons tout d'abord que la présente invention permet, en plus de la conversion de longueur d'onde, du démultiplexage ou de la remise en forme de signaux optiques, d'autres traitements de signaux optiques du fait qu'elle permet d'obtenir des fonctions de transfert ayant la forme souhaitée comme cela se fait pour les filtres électriques.

Par exemple, avec une réponse en forme de marche, il est possible d'utiliser un dispositif conforme à l'invention :

- pour l'inversion de signaux optiques
- en tant que dispositif à seuil de décision ou de déclenchement

- pour la régénération et le formatage de signaux optiques
- pour l'élimination du « bruit » optique.

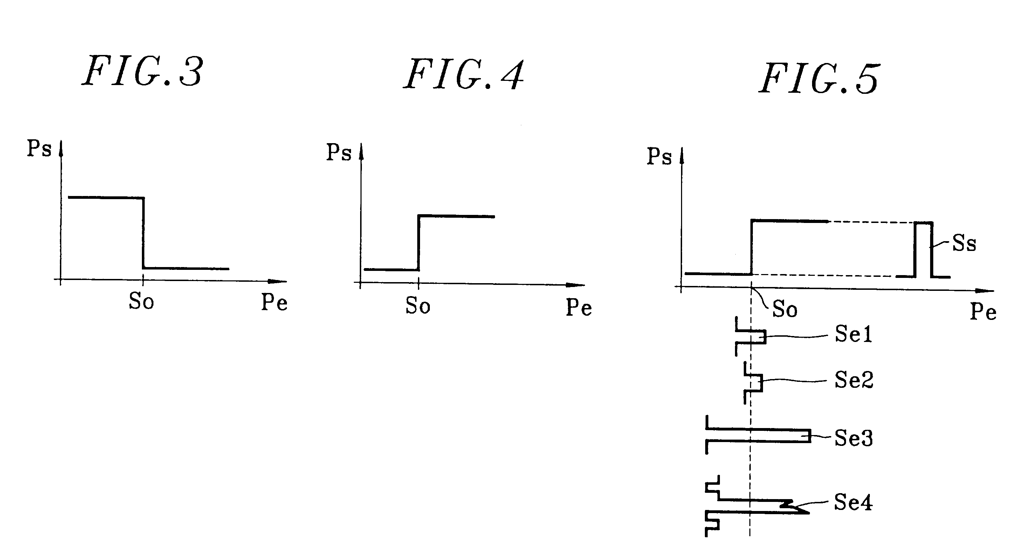

Ceci est schématiquement illustré par les figures 3, 4 et 5 où la puissance lumineuse Pe du signal d'entrée est portée en abscisse tandis que la puissance lumineuse Ps du signal de sortie est portée en ordonnée.

La figure 3 correspond au cas de l'inversion de signaux optiques et au cas d'un dispositif à seuil de décision.

La figure 4 correspond au cas d'un dispositif à seuil de déclenchement.

La figure 5 correspond au cas de la régénération et du formatage de signaux optiques et au cas de l'élimination du « bruit » optique.

Ces possibilités de régénération et de formatage de signaux optiques et d'élimination du bruit optique sont particulièrement intéressantes pour les transmissions sous forme numérique.

En effet le signal de sortie Ss du dispositif est le même quel que soit le signal d'entrée Se dès que la puissance lumineuse de celui-ci passe par un seuil So.

Le signal est alors régénéré (signaux d'entrée Se1 et Se2), formaté (signaux d'entrée Se1, Se2 et Se3) et le bruit au niveau des « zéros » ou des « uns » est éliminé (signal d'entrée Se4).

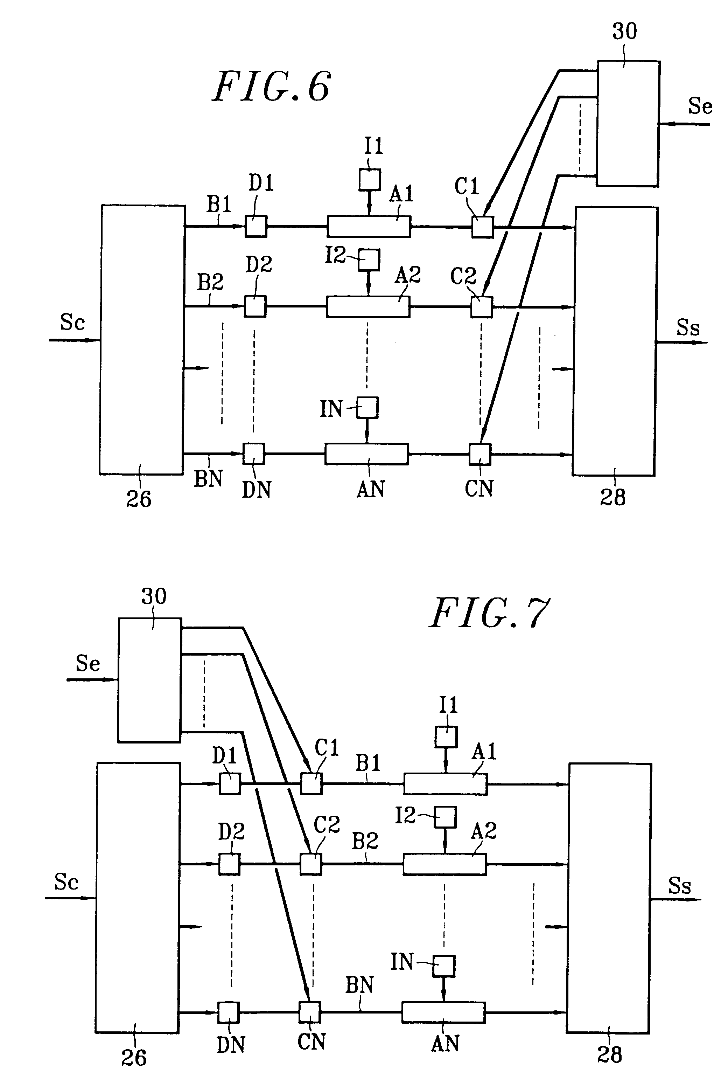

Les figures 6 à 9 représentent schématiquement divers modes de réalisation particuliers du dispositif objet de l'invention.

Précisons que ces dispositifs sont réalisables sur des substrats non représentés, par les techniques de l'optique intégrée et de la microélectronique.

Le dispositif conforme à l'invention, qui est schématiquement représenté sur la figure 6, comprend un interféromètre à N bras (N≥3) qui ont les références B1, B2 ... BN.

Ces bras B1, B2 ... N sont constitués de guides de lumière parallèles et de même longueur.

Le dispositif de la figure 6 comprend aussi deux coupleurs optiques de type 1xN qui ont les références 26 et 28.

Le coupleur 26 a

- une entrée qui reçoit un signal optique de commande Sc et
- N sorties respectivement reliées aux premières extrémités des bras B1 à BN de l'interféromètre.

Le coupleur 28 a

- une sortie qui fournit un signal optique de sortie Ss et
- N entrées respectivement reliées aux deuxièmes extrémités des bras B1 à BN de l'interféromètre.

Le dispositif de la figure 6 comprend aussi N amplificateurs optiques à semiconducteurs A1, A2 ... AN qui sont respectivement insérés dans les N bras B1, B2 ... BN.

On a également représenté sur la figure 6 les N moyens de commande I1, I2 ... IN des amplificateurs A1, A2 ... AN.

Ces moyens de commande permettent la polarisation (« bias ») et l'injection de courant dans ces amplificateurs.

Chaque amplificateur permet de modifier la phase d'un signal lumineux qui lui parvient, en fonction du courant injecté dans cet amplificateur par le moyen de commande correspondant ou en fonction de la puissance lumineuse qui traverse cet amplificateur.

Le dispositif de la figure 6 comprend aussi N déphaseurs optiques D1, D2 ... DN qui sont respectivement insérés dans les bras B1, B2 ... BN de l'interféromètre entre le coupleur 26 et les amplificateurs A1, A2 ... AN.

Ces déphaseurs sont par exemple de type électro-optique.

Ils ne sont pas indispensables à l'invention mais donnent à un dispositif conforme à l'invention un degré de liberté supplémentaire pour le réglage de ce dispositif.

Le coupleur 26 est conçu pour injecter la même puissance lumineuse dans chacun des bras de l'interféromètre.

Cependant, on pourrait choisir un coupleur optique 26 prévu pour injecter des puissances lumineuses différentes dans les bras de l'interféromètre (de tels coupleurs optiques étant connus dans l'état de la technique).

En fait, la répartition de puissance lumineuse dans chaque bras de l'interféromètre est déterminée selon le type de réponse que l'on souhaite obtenir du dispositif.

Le dispositif de la figure 6 comprend aussi un coupleur optique 30 de type 1xN et N coupleurs optiques de type 2x1 qui ont les références C1, C2 ... CN.

Comme on le voit sur la figure 6, chaque coupleur Ci (l'indice i variant de 1 à N) est inséré dans la partie du bras Bi comprise entre l'amplificateur correspondant Ai et le coupleur optique 28.

Le coupleur optique 30 reçoit un signal optique d'entrée de données Se, divise ce signal d'entrée Se en N parties et ces N parties sont injectées en contra-propagation dans les bras du dispositif de la figure 6 par l'intermédiaire des coupleurs C1 à CN.

On précise que le coupleur 30 n'injecte pas la même quantité de lumière dans chacun des bras.

Il est d'ailleurs possible d'utiliser des coupleurs C1 à CN qui n'ont pas non plus la même répartition en puissance.

De cette manière il est possible de distribuer la puissance lumineuse du signal d'entrée comme on le souhaite sur chacun des bras de l'interféromètre.

Dans un mode de réalisation non représenté, le coupleur optique 30 n'a que N-1 branches de sortie et répartit d'une manière déterminée le signal d'entrée Se entre ces N-1 branches et les quantités de lumière qui résultent de cette répartition sont injectées dans N-1 bras de l'interféromètre au moyen de N-1 coupleurs de type 2x1.

Bien entendu la somme des puissances lumineuses injectées dans les différents bras de l'interféromètre est égale à la puissance lumineuse du signal d'entrée Se.

Mais, comme on l'a vu, on n'utilise pas nécessairement une équi-répartition de cette puissance lumineuse du signal d'entrée Se.

On explqiue maintenant le fonctionnement du dispositif de la figure 6.

Le signal de commande Sc est un signal optique monochromatique et continu (c'est-à-dire d'intensité lumineuse constante au cours du temps).

Cependant, dans la présente invention, on n'exclut pas la possibilité d'utiliser un signal Sc qui soit polychromatique et/ou dont l'intensité lumineuse varie en fonction du temps.

En revenant au cas de la figure 6, le signal monochromatique et continu Sc est réparti, par l'intermédiaire du coupleur 26, dans les différents bras du dispositif.

La différenciation de la transmission de chaque bras se fait par ajustement du gain de l'amplificateur correspondant à ce bras.

A la sortie de ce dispositif, c'est-à-dire au niveau du coupleur 28, les diverses parties du signal Sc interfèrent les unes avec les autres de manière constructive ou destructive, en fonction de la phase relative qui est appliquée à chaque bras de l'interféromètre.

Le réglage des différentes phases est effectué au moyen des déphaseurs D1 à DN de manière à obtenir les conditions initiales souhaitées pour la transmission de lumière dans le dispositif en l'absence du signal d'entrée Se, seul le signal de commande Sc étant alors envoyé dans le dispositif.

En présence du signal d'entrée Se, l'injection de lumière en provenance du coupleur 30 dans un bras de l'interféromètre modifie l'indice de réfraction de l'amplificateur correspondant.

Le fait de ne pas injecter la même quantité de lumière dans chaque bras induit une variation de phase différentielle entre les différents bras du dispositif.

Ces différences de phase entre les bras sont alors transformées par interférence en variation de transmission du dispositif.

Il convient de noter que la phase relative de chaque bras en l'absence de signal d'entrée influence également la réponse du dispositif.

Dans ces conditions, un signal d'entrée modulé a n'importe quelle longueur d'onde comprise dans la bande de gain des amplificateurs optiques à semiconducteurs A1 à AN, se retrouve à la sortie du dispositif avec la longueur d'onde du signal de commande Sc.

Le dispositif a ainsi la fonction de convertisseur de longueur d'onde.

Dans le cas où l'on donne à ce dispositif d'autres fonctions, il est tout de même possible de traiter le signal d'entrée en conservant la longueur d'onde qu'il avait à l'entrée du dispositif.

Pour ce faire, il suffit d'utiliser un signal de commande Sc ayant la même longueur d'onde que le signal d'entrée Se.

Parmi les autres fonctions du dispositif, c'est-à-dire les autres traitements optiques qu'il est possible d'appliquer au signal d'entrée en même temps que la conversion de longueur d'onde, on peut citer par exemple la régénération du taux d'extinction ou la normalisation de la puissance lumineuse du signal.

Cette fonction est obtenue par la forme de la réponse de l'interféromètre.

Pour obtenir la réponse souhaitée de la part du dispositif, on choisit de façon appropriée :

- la répartition de puissance lumineuse dans l'ensemble des bras, en choisissant convenablement le coupleur 26 et, s'il le faut, le coupleur 28, et en réglant le gain de chacun des amplificateur A1 à AN,
- la quantité puissance lumineuse d'entrée injectée dans chaque bras, en choisissant convenablement les coupleurs 30 et C1 à CN,
- le nombre de bras, et
- la phase initiale sur chaque bras (c'est-à-dire en l'absence de signal d'entrée) en réglant convenablement pour ce faire les déphaseurs D1 à DN.

Un autre avantage lié à l'utilisation d'un dispositif du genre de celui de la figure 6 est qu'un tel dispositif conduit à la répartition du signal d'entrée dans un nombre de bras qui peut être choisi aussi grand qu'on le souhaite.

Ceci permet d'éviter la compression du gain dans les bras de l'interféromètre grâce à l'envoi d'une faible puissance lumineuse dans chaque bras.

La compression du gain perturbe en effet le fonctionnement des dispositifs interférométriques connus en introduisant une variation de transmission d'un bras en même temps que la variation de phase avec le signal d'entrée.

Le dispositif de la figure 6 correspond à une injection du signal d'entrée en contra-propagation.

Indiquons à ce propos que les déphaseurs D1 à DN pourraient être placés entre les amplificateurs et le coupleur 28 au lieu d'être placés entre le coupleur 26 et ces amplificateurs (ce qui est le cas de la figure 6).

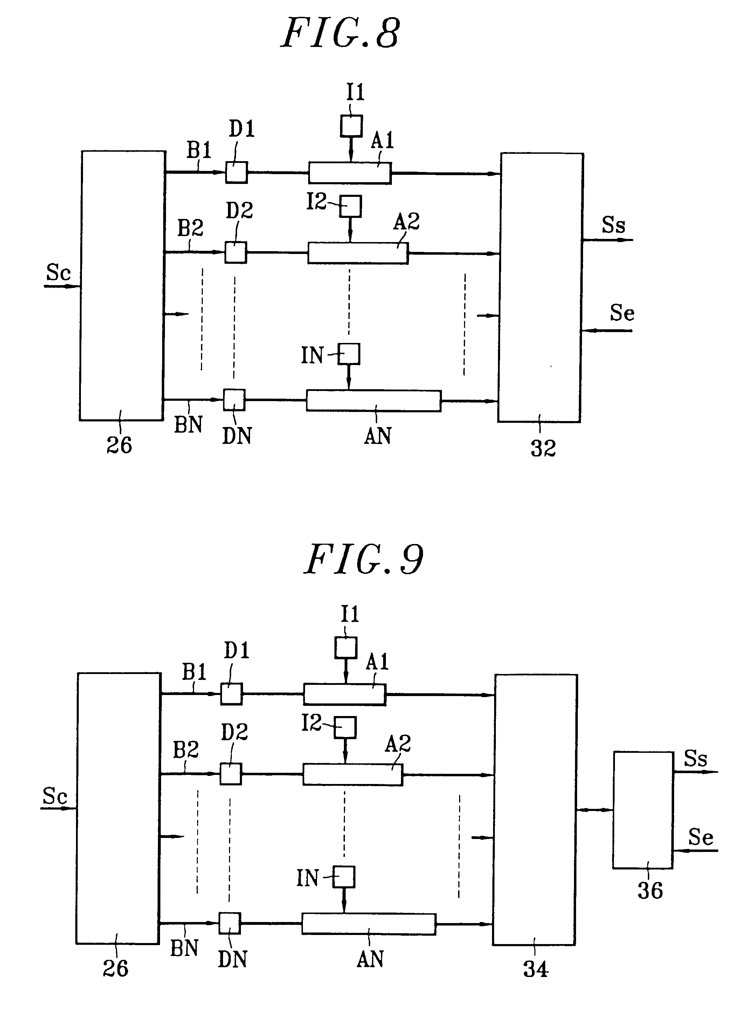

La figure 7 est une vue schématique d'un autre dispositif conforme à l'invention dans lequel on utilise une injection du signal d'entrée en co-propagation.

Le dispositif de la figure 7 est identique à celui de la figure 6 à ceci près que les coupleurs C1, C2 ... CN sont, dans le cas de la figure 7, placés entre le coupleur 26 et les amplificateurs A1, A2 ... AN correspondants.

De plus, dans le cas de la figure 7, les déphaseurs D1, D2 ... DN doivent être placés entre le coupleur 26 et les coupleurs C1, C2 ... CN.

Le dispositif conforme à l'invention, qui est schématiquement représenté sur la figure 8, diffère de celui de la figure 6 par le fait que le coupleur 30 et les coupleurs C1 à CN sont supprimés.

De plus, le coupleur 28 est remplacé par un coupleur 32 de type Nx2.

Ce coupleur 32 a, d'un côté, N entrées respectivement reliées aux deuxièmes extrémités des N bras de l'interféromètre du dispositif et, de l'autre côté, une entrée destinée à recevoir le signal d'entrée Se et une sortie destinée à fournir le signal de sortie Ss.

On obtient ainsi une structure plus simple que celles des dispositifs des figures 6 et 7.

Dans le cas de la figure 8, une configuration particulièrement intéressante est fondée sur des répartitions variables du signal de commande Sc et de la phase à l'origine de ce signal de commande dans les différents bras de l'interféromètre.

Dans cette configuration, on peut utiliser (parce que c'est plus simple) une répartition linéaire de la phase induite par le signal d'entrée Se dans les bras de l'interféromètre.

On a alors

$$\Delta\varphi = \varphi_i - \varphi_{i-1} \text{ pour } 2 \leq i \leq N$$

$\varphi_i$ étant la phase induite par la puissance d'entrée sur le bras numéro i et $\Delta\varphi$ étant le déphasage induit par la puissance d'entrée entre deux bras consécutifs.

La phase linéaire peut être réglée par la répartition du signal d'entrée sur les bras de l'interféromètre.

Les coupleurs 26 et 32 peuvent être des coupleurs MMI.

A ce sujet on consultera le document (7).

Dans ce cas, le coupleur 26 est un coupleur MMI de type 1xN et le coupleur 32 est un coupleur MMI de type NX2.

La répartition en puissance des coupleurs 26 et 32 peut être uniforme dans les différents bras.

La définition et la réalisation des coupleurs 26 et 32 est alors simple.

Une variation linéaire de phase pour les parties du signal de commande qui traversent les bras, en fonction de la puissance lumineuse du signal d'entrée, est obtenue par utilisation d'amplificateurs optiques à semiconducteurs de différentes longueurs dans les bras.

La différence de phase $\Delta\Phi$ entre deux bras consécutifs Bj et Bj+1 est donnée en première approximation par la formule suivante :

$$\Delta\Phi = 2\pi(n_j.L_j - n_{j+1}.L_{j+1})/\lambda.$$

Dans cette formule

- $\lambda$ représente la longueur d'onde du signal de commande Sc,
- $L_j$ et $L_{j+1}$ représentent respectivement les longueurs des amplificateurs Aj et Aj+1 appartenant à ces bras consécutifs et
- $n_j$ et $n_{j+1}$ représentent respectivement les indices effectifs des guides actifs de ces amplificateurs Aj et Aj+1.

Il convient de noter que $\Delta\Phi$ dépend des puissances lumineuses respectivement injectées dans ces bras consécutifs étant donné que les indices effectifs $n_j$ et $n_{j+1}$ dépendent de ces puissances.

Une autre possibilité existe pour entretenir une relation de variation de phase différentielle linéaire entre les bras en fonction de la puissance lumineuse du signal d'entrée.

Cette variation peut être obtenue en polarisant respectivement les amplificateurs avec des courants de valeurs différentes.

Ceci implique

- que la transmission des bras est fixée et
- que, pour obtenir la forme de fonction de transfert souhaitée, le seul paramètre disponible est le réglage de la phase de chaque bras avec le déphaseur correspondant.

Il y a alors un degré de liberté de moins pour le réglage du dispositif.

Il est à noter que l'utilisation d'amplificateurs de longueurs différentes permet de changer, pour chaque bras, le déphasage de la partie correspondante du signal d'entrée ou du signal de commande.

Un autre dispositif conforme à l'invention est schématiquement représenté sur la figure 9 et diffère du dispositif de la figure 8 par le fait que, dans le cas de la figure 9, le coupleur 32 est remplacé par deux coupleurs optiques 34 et 36.

Le coupleur 34 est un coupleur de type Nx1, par exemple un coupleur MMI de type Nx1.

Les N entrées de ce coupleur 34 sont reliées respectivement aux deuxièmes extrémités des bras B1 à BN de l'interféromètre.

Le coupleur 36 est un coupleur optique de type 1x2, par exemple un coupleur MMI de type 1x2.

Une voie de ce coupleur 36 est reliée à la sortie du coupleur 34 et les deux autres voies du coupleur 36 sont respectivement prévues pour recevoir le signal d'entrée Se et fournir le signal de sortie Ss.

Le dispositif de la figure 9 est plus simple à fabriquer que le dispositif de la figure 8.

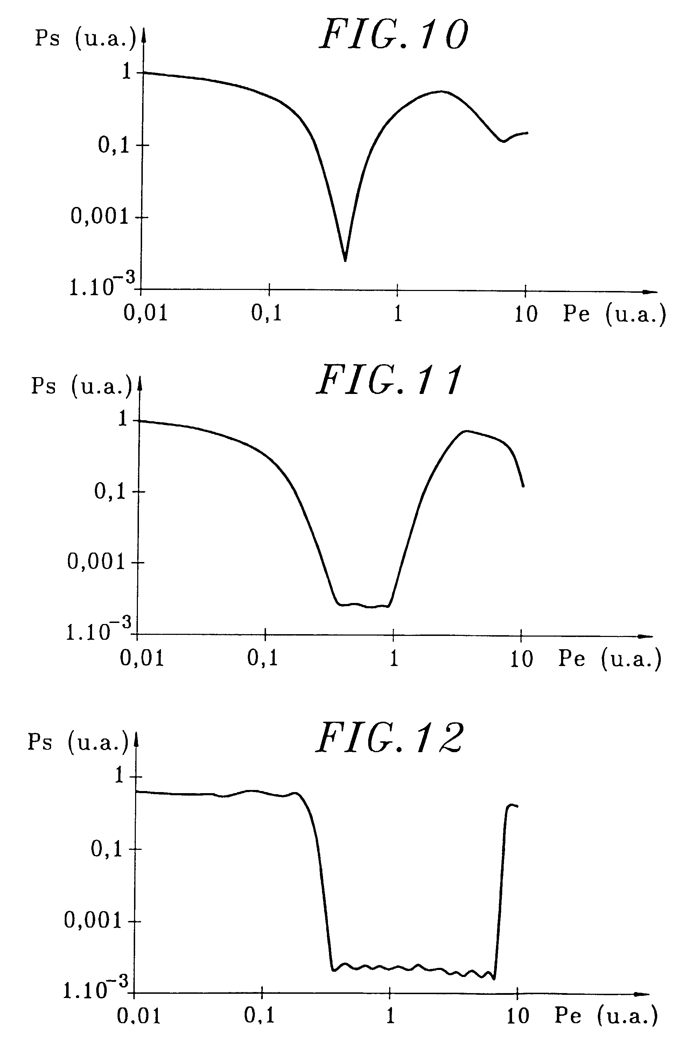

La possibilité de donner la forme que l'on souhaite à la transmission d'un dispositif conforme à l'invention est illustrée par les exemples donnés ci-dessous en faisant référence aux figures 10, 11 et 12.

Sur ces figures, on a porté en abscisse la puissance lumineuse Pe du signal d'entrée Se et en ordonnée on a porté la puissance lumineuse Ps du signal de sortie Ss.

Ces puissances Pe et Ps sont exprimées en unités arbitraires (notées u.a. sur les figures 10 à 12).

La figure 10 représente la transmission classique d'un dispositif interférométrique à deux bras de type Mach-Zehnder.

L'exemple de la figure 11 est relatif à un dispositif conforme à l'invention à cinq bras tandis que l'exemple de la figure 12 est relatif à un dispositif conforme à l'invention à seize bras .

Les figures 10 à 12 illustrent surtout l'utilisation de la caractéristique sur-linéaire inversée (partie gauche des courbes de transmission).

Une réponse sur-linéaire non-inversée peut également être obtenue en partant d'une forme de fonction de transfert adaptée.

Les conditions pour obtenir les courbes de transmission des figures 11 et 12 sont décrites ci-dessous.

La puissance lumineuse de la partie du signal de commande qui arrive à chacune des deuxièmes extrémités des bras du dispositif en l'absence de signal d'entrée est réglée en modifiant le gain de l'amplificateur correspondant, de façon à obtenir une répartition de transmission proportionnelle aux puissances indiquées dans les tableaux I et II qui sont placés à la fin de la présente description.

Le tableau I est relatif au dispositif conforme à l'invention ayant cinq bras.

Le tableau II est relatif au dispositif conforme à l'invention ayant seize bras.

Dans ces tableaux

- Bi représente le bras numéro i, pour i variant de 1 à 5 (tableau I) ou de 1 à 16 (tableau II),
- Pi (en unités arbitraires) représente la puissance lumineuse de la partie du signal de commande qui arrive à la deuxième extrémité du bras Bi, et
- $\varphi$i (en radians) est la phase relative de la lumière dans le bras Bi.

Les phases relatives des bras sont ensuite réglées à l'aide des déphaseurs suivant les valeurs indiquées dans ces mêmes tableaux.

On réalise également une variation linéaire de la phase sur les différents bras avec l'injection optique du signal d'entrée.

L'écart de phase peut être obtenu par exemple avec au moins l'une des deux méthodes proposées précédemment (amplificateurs de longueurs différentes et/ou courants de polarisation différents).

On a réalisé les simulations correspondant aux figures 11 et 12 avec un écart de phase induit par le signal d'entrée qui varie de 0 à $1,6\pi$.

On précise que dans des dispositifs conformes à l'invention tels que ceux des figures 6 à 9 un filtre qui est calé sur la longueur d'onde du signal de commande est utilisé pour ne laisser passer que la lumière qui a cette longueur d'onde.

Ceci est d'ailleurs nécessaire dans le cas de la co-propagation (figure 7).

Ce filtre peut être placé sur la voie de sortie de l'interféromètre.

On indique également que l'utilisation de modulateurs électro-optiques dans des dispositifs interférométriques à 2 bras est connue par le document (8).

Les documents cités dans la présente description sont les suivants :

(1) J.M. Wiesenfeld, B. Glance, J.S. Perino, A.H. Gnauck, "Wavelength conversion at 10 Gb/s using a semiconductor amplifier", IEEE Photonics Technol. Lett., vol 5, n°11, pp. 1300 à 1303, 1993

(2)B. Mikkelsen, T. Durhuus, C. Joergensen, R.J.S. Pedersen, C. Braagaard, K.E. Stubkjaer, "Polarisation insensitive wavelength conversion of 10 Gb/s signals with SOAs in a Michelson interferometer", Electron. Lett., vol.30, n°3, pp. 260 et 261, 1994

(3) F. Ratovelomanana, N. Vodjani, E. Enard, G. Glastre, D. Rondi, R. Blondeau, C. Joergensen, T. Durhuus, B. Mikkelsen, K.E. Stubkjaer, A. Jourdan, G. Soulage, "An all-optical wavelength converter with semiconductor optical amplifier monolithically integrated in an asymetric passive Mach-Zehnder interferometer", IEEE Photonics Technol. Lett., vol.7, n°10, pp. 992 à 994, 1995

(4) W. Idler, M. Schilling, K. Daub, E. Lach, G. Laube, U. Koerner, D. Baums, K. Wünstel, "Compact monolithic wavelength converter with srong signal improvement including chirp compression", Compte-rendus de la 21ème *Conference on Optical Communications (ECOC'95),* Brussels, pp.621 à 624

(5) C. Joergensen, S. L. Danielsen, T. Durhuus, B. Mikkelsen, K.E. Stubkjaer, N. Vodjdani, F. Ratovelomanana, A. Enard, G. Glastre, D. Rondi, R. Blondeau, "Wavelength conversion by optimized monolithic integrated Mach-Zehnder Interferometer", IEEE photonics technology letters, vol.8, n°4, avril 1996, pp.521 à 523

(6) S.L. Danielsen, P.B. hansen, C. Joergensen, K.E. Stubkjaer, M. Schilling, K. Daub, K. Dütting, M. Klenk, W. Idler, P. Doussiere, F. Pommerau, "Improvement of input power dynamic range for 20 Gbit/s optical WDM switch nodes using an integrated Michelson wavelength converter", OFC'97 Technical Digest, pp.249, 1997

(7) L.B. Soldano, E.C.M. Pennings, "Optical MultiMode Interference Devices Based on self-imaging : principles and applications", J. *Lightwave Technol.,* vol.13 (4), pp.615 à 627, 1995

(8) F. Devaux, D. Sigogne et S. Chelles, "Dispositif non-linéaire de traitement de signaux optiques", demande de brevet européen EP0795778.

TABLEAU I

| Bi (1≤i≤5) | 1 | 2 | 3 | 4 | 5 |
|---|---|---|---|---|---|
| φi (rd) | 1,6 | 0,5 | -2,7 | 3 | 2,3 |
| Pi (u.a.) | 0,04 | 0,03 | 0,22 | 0,43 | 0,28 |

TABLEAU II

| Bi (1≤i≤16) | 1 | 2 | 3 | 4 | 5 | 6 | 7 | 8 |
|---|---|---|---|---|---|---|---|---|
| φi (rd) | -0,7 | -1,8 | -2,2 | -1,4 | -2,5 | -2,5 | 0,9 | -1,4 |
| Pi (u.a.) | 0,09 | 0,1 | 0,03 | 0,13 | 0,21 | 0,17 | 0,07 | 0,04 |
| Bi | 9 | 10 | 11 | 12 | 13 | 14 | 15 | 16 |
| φi (rd) | -2,1 | -2,5 | 2,7 | 0,5 | -1,5 | -2,3 | -2,5 | -3,1 |
| Pi (u.a.) | 0,03 | 0,05 | 0,04 | 0,02 | 0,02 | 0,01 | 0,01 | 0,01 |

**Revendications**

1. Dispositif optique non-linéaire de traitement d'un signal optique, ce dispositif étant caractérisé en ce qu'il comprend :

   - un interféromètre optique comportant N bras (B1, B2 ... BN) respectivement constitués de N guides de lumière et ayant chacun des première et deuxième extrémités, N étant un nombre entier au moins égal à 3,
   - N amplificateurs optiques à semiconducteurs (A1, A2 ... AN) qui sont respectivement insérés dans les N bras de l'interféromètre,
   - un premier moyen de couplage optique (26) prévu pour

     • recevoir un premier signal optique appelé signal de commande et
     • répartir d'une manière déterminée ce signal de commande dans les N bras à partir des premières extrémités de ceux-ci et

   - un deuxième moyen de couplage optique (28, 30, C1, C2 ... CN, 32, 34, 36) prévu pour

     • recevoir un deuxième signal optique appelé signal d'entrée et répartir d'une manière déterminée ce signal d'entrée dans au moins N-1 des N bras, de manière à modifier l'indice de réfraction des amplificateurs optiques à semiconducteurs insérés dans ces N-1 bras et à induire des déphasages entre les N bras de l'interféromètre, et
     • collecter, à partir des N bras, des lumières résultant de la répartition du signal de commande dans les N bras et fournir un troisième signal optique appelé signal de sortie et résultant de l'interférence de ces lumières.

2. Dispositif selon la revendication 1, comprenant en outre N moyens de déphasage (D1, D2 ... DN) qui sont respectivement insérés dans les N bras et aptes à modifier les phases respectives des lumières résultant de la répartition du signal de commande dans les N bras en l'absence du signal d'entrée.

3. Dispositif selon la revendication 2, dans lequel chaque moyen de déphasage (D1, D2 ... DN) est choisi dans le groupe comprenant les modulateurs électro-optiques et les guides de lumière thermo-réfractifs.

4. Dispositif selon l'une quelconque des revendications 1 à 3, dans lequel les amplificateurs optiques à semiconducteurs (A1, A2 ... AN) ont des longueurs inégales.

5. Dispositif selon l'une quelconque des revendications 1 à 4, dans lequel le premier moyen de couplage optique comprend un coupleur optique (26) de type 1xN ayant une entrée prévue pour recevoir le signal de commande et N sorties respectivement reliées aux premières extrémités des N bras.

6. Dispositif selon l'une quelconque des revendications 1 à 5, dans lequel le deuxième moyen de couplage optique comprend :

   - un coupleur optique (28) de type Nxl ayant N entrées respectivement reliées aux deuxièmes extrémités des N bras et une sortie prévue pour fournir le signal de sortie,
   - un coupleur optique (30) ayant une entrée prévue pour recevoir le signal d'entrée et au moins N-1 sorties qui reçoivent chacune une partie de ce signal d'entrée et
   - au moins N-1 coupleurs optiques (C1, C2 ... CN) respectivement reliés à ces N-1 sorties et prévus pour injecter ces parties du signal d'entrée dans au moins N-1 des N bras, entre les amplificateurs optiques à semiconducteurs correspondants et les deuxièmes extrémités de ces bras, en sens contraire aux lumières résultant de la répartition du signal de commande dans les bras.

7. Dispositif selon l'une quelconque des revendications 1 à 5, dans lequel le deuxième moyen de couplage optique comprend :

   - un coupleur optique (28) de type Nxl ayant N entrées respectivement reliées aux deuxièmes extrémités des N bras et une sortie prévue pour fournir le signal de sortie,
   - un coupleur optique (30) ayant une entrée prévue pour recevoir le signal d'entrée et au moins N-1 sorties qui reçoivent chacune une partie de ce signal d'entrée et

- au moins N-1 coupleurs optiques (C1, C2 ... CN) respectivement reliés à ces N-1 sorties et prévus pour injecter ces parties du signal d'entrée dans au moins N-1 des N bras, entre les premières extrémités de ces bras et les amplificateurs optiques à semiconducteurs correspondants, dans le sens des lumières résultant de la répartition du signal de commande dans les bras.

8. Dispositif selon l'une quelconque des revendications 1 à 5, dans lequel le deuxième moyen de couplage optique comprend un coupleur optique (32) de type Nx2 ayant, d'un côté, N branches respectivement reliées aux deuxièmes extrémités des N bras de l'interféromètre et, de l'autre côté, deux branches, l'une de celles-ci étant prévue pour recevoir le signal d'entrée et l'autre pour fournir le signal de sortie.

9. Dispositif selon l'une quelconque des revendications 1 à 5, dans lequel le deuxième moyen de couplage optique comprend :

   - un coupleur optique (34) de type Nx1 ayant, d'un côté, N branches respectivement reliées aux deuxièmes extrémités des N bras de l'interféromètre et, de l'autre côté, une branche d'entrée-sortie prévue pour la circulation des signaux d'entrée et de sortie, et
   - un coupleur optique (36) de type 1x2 ayant, d'un côté, une branche reliée à la branche d'entrée-sortie de ce coupleur optique de type Nx1 et, de l'autre côté, deux branches, l'une de celles-ci étant prévue pour recevoir le signal d'entrée et l'autre pour fournir le signal de sortie.

10. Dispositif selon l'une quelconque des revendications 5 à 9, dans lequel au moins l'un des coupleurs optiques est un coupleur optique multimode par interférence (28, 32, 34).

# FIG.1

# FIG.2

FIG.3

FIG.4

FIG.5

## FIG.6

## FIG.7

## FIG.8

## FIG.9

FIG.10

Ps (u.a.)

Pe (u.a.)

FIG.11

Ps (u.a.)

Pe (u.a.)

FIG.12

Ps (u.a.)

Pe (u.a.)

**Office européen des brevets**

**RAPPORT DE RECHERCHE EUROPEENNE**

Numéro de la demande

EP 98 40 2487

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 795 778 A (FRANCE TELECOM) 17 septembre 1997 * colonne 1, ligne 1 - colonne 3, ligne 52 * * colonne 7, ligne 32 - ligne 42 * * colonne 8, ligne 54 - colonne 9, ligne 20; figures 1,5,11 * | 1-10 | G02F1/35 |
| A | EP 0 756 184 A (BOSCH GMBH ROBERT) 29 janvier 1997 * colonne 4, ligne 58 - colonne 6, ligne 36; figures 1-6 * | 1 | |
| A | US 5 555 086 A (VONBIEREN KARLHEINZ ET AL) 10 septembre 1996 * colonne 2, ligne 45 - colonne 3, ligne 39 * * colonne 4, ligne 8 - colonne 5, ligne 3; figure 1 * | 1 | |
| A | US 5 606 446 A (DAVIS CHARLES M ET AL) 25 février 1997 * colonne 7, ligne 58 - colonne 9, ligne 35 * * colonne 12, ligne 10 - colonne 13, ligne 3; figures 2,3 * | 1 | **DOMAINES TECHNIQUES RECHERCHES (Int.Cl.6)** G02F G02B G01D H04B |

Le présent rapport a été établi pour toutes les revendications

| Lieu de la recherche | Date d'achèvement de la recherche | Examinateur |
|---|---|---|
| BERLIN | 8 février 1999 | Manntz, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 98 40 2487

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-02-1999

| Document brevet cité<br>au rapport de recherche | Date de<br>publication | Membre(s) de la<br>famille de brevet(s) | Date de<br>publication |
|---|---|---|---|
| EP 0795778 A | 17-09-1997 | FR 2746192 A | 19-09-1997 |
| EP 0756184 A | 29-01-1997 | DE 19527219 A | 30-01-1997 |
| US 5555086 A | 10-09-1996 | AUCUN | |
| US 5606446 A | 25-02-1997 | US 5459600 A<br>AU 2097795 A<br>WO 9524779 A | 17-10-1995<br>25-09-1995<br>14-09-1995 |

EPO FORM P0460

Pour tout renseignement concernant cette annexe : voir Journal Officiel de l'Office européen des brevets, No.12/82